# EUROPEAN PATENT APPLICATION

(11) **EP 1 065 640 A2**
(43) Date of publication of application: **03.01.2001**
(21) Application number: 00850119.9
(22) Date of filing: 28.06.2000
(51) Int. Cl.: G07F 19/00

(54) **Charge card system**

(30) Priority: 28.06.1999 SE 9902464
(71) Applicant: Kumayama AB, 183 63 Täby (SE)
(72) Inventor: Björnberg, Arne, 183 63 Täby (SE)
(74) Representative: Halldin, Bo

(57) **Abstract**

A charge card system, comprising a charge card (3), having a card number (2) identifying the owner of the card, a card reader (1), for reading the card number (2) on the card (3), a computer (5), comprising a microprocessor and memory means, containing a customer database system supporting the card, and a control console (4), operatively connected to the card reader and the computer, wherein the computer (5) is programmed to accept card numbers (2) originating from a plurality of different card issuers to be connected to an account of the charge card system.

## Description

### Field of the Invention

The present invention relates to a charge card system.

### Description of the Prior Art

The use of prior art charge cards or credit cards, plastic cards having a magnetic stripe encoded with data appropriate for the particular application is very standardised. The magnetic stripe cards are similar for every system. This is a prerequisite of parking-meters accepting different kinds of cards, such as international charge and credit cards or cards issued by different petrol and perishable stores etc, in order to operate properly.

A conventional charge card system comprises three main elements: hardware, a database, and an "invoicing machine".

The hardware, system and procedure provide the physical card handling, investigation into credit rating, protection against theft, freezing and several other functions.

This procedure and handling accounts for a considerable amount of the operative expenses and investment costs of the charge and credit card systems.

The database is in most cases provided with an on-line access from different transaction places. This access has several tasks: for example verification of the charge card or credit card, i.e the process of determining that the card is valid and connected to an account, unexpired, and where appropriate determining that the credit limit has not been exceeded. Further, every transaction is recorded in the database. Then, the database delivers input data to the invoicing machine, and after a period of use representing a great and valuable information for the vendor, because it makes it possible to follow up the consumer habits of separate or groups of customers.

The invoice machine, i.e the hardware, software and organisation responsible for that the payment for the transaction recorded in the database is delivered to the right person. Usually, this service is outsourced to a bank or another kind of financial function.

Such conventional concepts is associated with considerable launching costs. Thus, multiple stores, having set up their own card systems, have usually had tremendous investment costs. However, a considerable amount of these costs consist of advertisment and marketing costs intended to secure a cadre of card holders.

Another disadvantage of these prior art charge card and credit card systems is that a user has to maintain a separate card for each account to which he is connected, for example a VISA card and a Eurocard, both of which are credit cards, a petrol charge card and a perishable stores card etc.

A system trying to solve this problem is disclosed by US-A-4 700 055. The system enables a user to carry one credit card instead of many. The information pertaining to each credit card account, such as the name of the account, the number of the account, and its expiration date, are encoded on the card, by for example magnetic means. The owner's name is also encoded on the card, but the card does not bear any visually-perceptible indication of the name of the owner, or of the names of the credit card accounts represented on the card. In an alternative embodiment, only the name and identification number of the owner are encoded on the card, and the information for the various credit card accounts is stored in a remotely-located computer.

According to the system described in US-A-4 700 055 it is important that the card identifies the cardholder, but the identification should not be perceptible to the human eye. Consequently, in order to operate properly or at all, a special kind of card has to be utilized in this system.

### Summary of the Invention

It is an object of the present invention to provide an improved charge card system which enables registration and usage of an arbitrary charge card or credit card in a charge card system.

Another object of the invention is to provide a charge card system which replaces a plurality of credit cards with any one of said plurality of cards.

These objects are accomplished with a charge card system for representing a single card or a plurality of charge cards with a single arbitrary card according to the invention, comprising an arbitrary charge card, having a card number identifying the owner of the card, a card reader, for decoding the card number stored on the card, a computer, comprising a microprocessor and memory means, containing a customer database system supporting the card, a control console, operatively connected to the card reader and the computer, wherein the computer is programmed to accept card numbers originating from a plurality of different card issuers.

In accordance with another aspect of the invention the console is operatively connected to a verification system of the originating card issuer for determining the validity of a proposed transaction.

In accordance with a further aspect of the invention the computer is programmed to distribute payments among several customers, enabling a distribution over the time depending on the purchasing history.

In accordance with still another aspect of the invention the card is provided with information identifying the name of each of the charge card systems to which the card is connected.

An advantage of the charge card system according to the present invention is that a card user which is connected to several charge card and credit card systems etc does only need to maintain a single arbitrary card originating from any card issuer.

Other objects and advantages of the invention will become more apparent from the following detailed description when taken in conjunction with the accompanying drawings.

### Brief Description of the Drawings

FIG 1 is block diagram of a charge card system according to the invention;
FIG 2 is a flowchart illustrating a method of registration of a charge card in the charge card system in FIG 1; and
FIG 3 is a flowchart illustrating a method of processing a charge card transaction in the charge card system in FIG 1.

### Detailed Description of the Invention

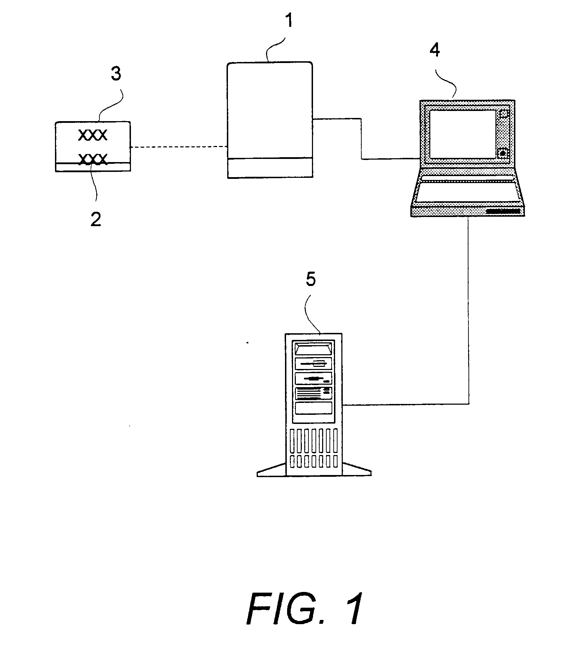

Refering to FIG 1, a charge card system in accordance with the present invention comprises a card reader 1, for decoding a card number 2, identifying the owner of a card 3, being stored or embossed on a charge card or credit card 3 inserted into the reader 1.

A control console 4, described later, is operatively connected to the card reader 1 and a central computer 5, comprising a microprocessor and memory means, containing a customer database system supporting the card 3. In one embodiment of the invention the console 4 operates as a terminal, i.e with limited but the most essential functionalities, connected to a remote or at least a separate computer 5.

In an alternative embodiment the console 4 is directly connected to a local computer at the point of sale, having a local version of the database. Of course, in this case the local computer has to be operatively connected to the central computer in order to exchange data between the local and central computer.

The charge card system according to the present invention is a system for representing a single charge card or a plurality of charge cards with a single arbitrary card. Any charge card, credit card or any other card, having a card number identifying the owner of the card, from any card issuer can be used in the system according to the invention and, therefore, the computer is programmed to accept card numbers originating from a plurality of different card issuers. In the following, charge card is used as a generic term for charge cards, credit cards or any other similar cards in order to make the description clear and is not intended for limiting purposes.

Conventional charge cards or credit cards are plastic cards, having a magnetic stripe encoded with data appropriate for a particular application. The magnetic stripe cards are similar for every system, for example each card has a card number which is both stored on the stripe and embossed on the card. However, cards from different card issuers have different card number series and the length of the card number from one issuer may differ from the length of the card number on a card provided by another card issuer. To be able to accept and handle card numbers originating from a plurality of different card issuers the computer 5 is programmed to store, at an initial registration of the card to the system, an electronic representation of each card number 2 in the database as a determined number of bits. The card number 2 can be entered into the system either by inserting the card 2 into the card reader 1, wherein the system reads the card number 2 from the card 3, or manually through a regular key stroke on the console 4. Commonly used card numbers have 6-20 number of figures and/or letters, but the charge card system according to the invention can accept card numbers of arbitrary length.

Since the computer is programmed to store an electronic representation of each card number 2 in the database as a determined number of bits, the computer is further programmed to extend an electronic representation of a short card number with an additional number of characters, and to reduce an electronic representation of a long card number, forming a card number comprising the determined number of bits.

In this embodiment of the invention every transaction place or point of sale, having a card reader 1 and console 4 as described above, has an on-line access to the database system. One task of the database system is to operate as a verification system for determining the validity of a proposed transaction.

The verification system is included as a part of the charge card system or in an alternative embodiment of the invention, the console 4 or the computer is operatively connected to a verification system of the originating card issuer for determining the validity of a proposed transaction.

Every transaction is recorded in the database, and the database delivers input data to an invoicing machine, integrated with or operatively connected to the console 4.

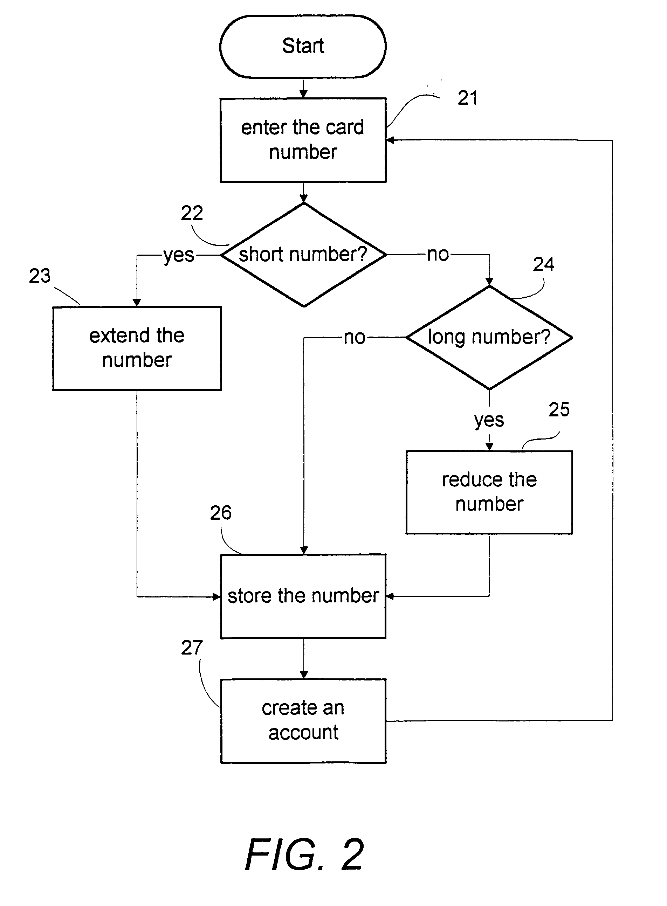

Preceding each transaction, the identity of the user of a particular card and if he is the authorised user are determined by either entering a PIN (personal identification number) code on the console 4 or sign an invoice deliverd by the system at the point of sale. The entered PIN code is compared to a PIN code stored either on the card itself or in the memory means in the system and if they match the transaction can proceed. As can be seen in FIG 2, the registration of a charge card and/or credit card, having a card number identifying the owner of the card, to a charge card system according to the invention, the card number, originating from any of a plurality of different card issuers to be connected to an account of the charge card system, is entered into the system either orraly to the merchant who enters the number on a keypad of the console or via the card reader at step 21.

At step 22 it is checked if the card number is short, and if so the electronic representation of the number is extended with an additional number of characters, forming a card number comprising the determined number of bits, at step 23. And similarly, the electronic representation of a long card number is reduced. This is checked at step 24 and the number is extended at step 25.

Then, the extended or reduced or unchanged electronic representation of the card number is stored in the database at step 26, and an account is created in the system connected to the entered card number at step 27.
Preferably, the card number is stored in the database as a determined number of bits.

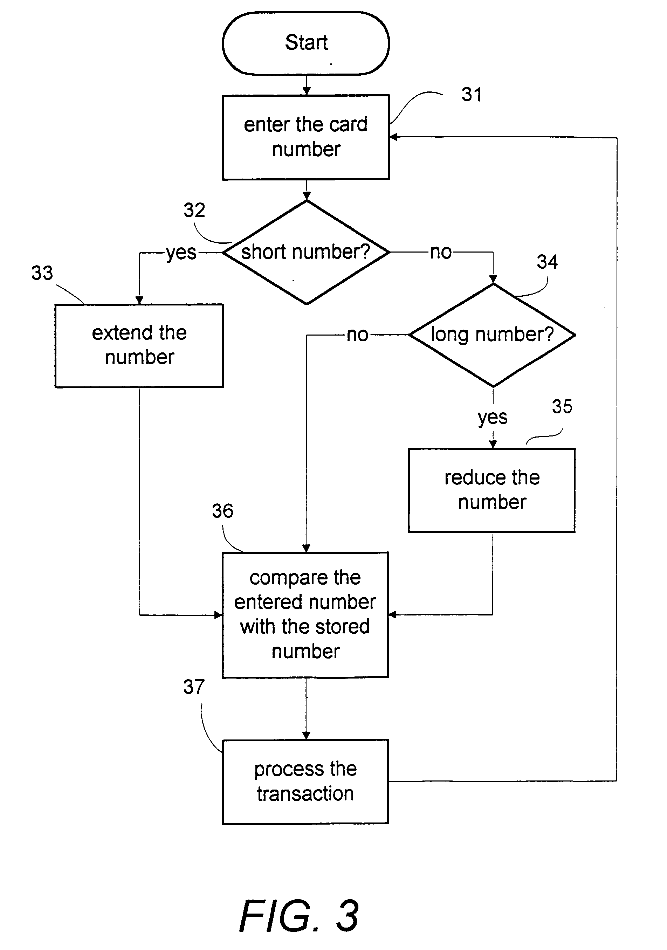

Now the processing of a charge card transaction in the charge card system according to the inventoin will be described with reference to FIG 3. A transaction is performed by entering a card number originating from any of a plurality of different card issuers into the system at step 31. The validity of the entered card number is verified by determining if the number is connected to an account in the charge card system. An electronic representation of the card number is created, having a determined number of bits. If the entered card number is short is checked at step 32 and, if so, the electronic representation is extended with an additional number of characters, forming a card number with the determined number of bits at step 33. Similarly, if the entered card number is long is checked at step 34 and, if so, the electronic representation of the long card number entered into the system is reduced, forming a card number comprising the determined number of bits at step 35.

At step 36, the electronic representation of the entered number is compared with the electronic representation of the numbers already regitered in the system database as being connected to an account. If the number is connected to an account in the system, the transaction is processed for the connected account at step 37.

Although the invention has been described by way of specific embodiments thereof, including numerous characteristics and advantages of the present invention, together with details of the configuration and function of the invention, it is to be understood that the disclosure is illustrative only and changes may be made within the scope of the invention as expressed in the appended claims.

For example, the card can be provided with visible labels having information identifying the name of each of the charge card systems to which the card is connected.

In still another embodiment of the invention the computer is programmed to distribute payments among several customers, enabling a distribution over the time depending on the purchasing history.

## Claims

1. A charge card system, comprising
a charge card (3), having a card number (2) identifying the owner of the card,
a card reader (1), for reading the card number (2) on the card (3),
a computer (5), comprising a microprocessor and memory means, containing a customer database system supporting the card (3),
a control console (4), operatively connected to the card reader and the computer,
**characterized** in that the computer (5) is programmed to accept card numbers (2) originating from a plurality of different card issuers to be connected to an account of the charge card system.

2. A charge card system according to claim 1,
**characterized** in that the card number (2) has an arbitrary length.

3. A charge card system according to claim 1 or 2,
**characterized** in that the computer (5) is programmed to store, at an initial registration of the card to the system, an electronic representation of each card number (2) in the database as a determined number of bits.

4. A charge card system according to claim 3,
**characterized** in that the computer (5) is programmed to extend an electronic representation of a short card number with an additional number of characters, forming a card number comprising the determined number of bits.

5. A charge card system according to claim 3 or 4,
**characterized** in that the computer (5) is programmed to reduce an electronic representation of a long card number, forming a card number comprising the determined number of bits.

6. A charge card system according to any of the preceding claims, **characterized** in that the console (4) is operatively connected to a verification system for determining the validity of a proposed transaction.

7. A charge card system according to any of the claims 1-5, **characterized** in that the console (4) is operatively connected to a verification system of the originating card issuer for determining the validity of a proposed transaction.

8. A charge card system according to any of the preceding claims, **characterized** in that the computer (5) is programmed to distribute payments among several customers, enabling a distribution over the time depending on the purchasing history.

9. A charge card system according to any of the preceding claims, **characterized** in that the card (3) is provided with information identifying the name of each of the charge card systems to which the card is connected.

10. A charge card system according to claim 9,
**characterized** in that the information, identifying the name of each of the charge card systems to which the card is connected, is presented on labels attached to the card.

11. A method of registration of a charge card and/or credit card (3), having a card number (2) identifying the owner of the card, to a charge card system,
**characterized** by the steps of:
entering into the system the card number originating from any of a plurality of different card issuers to be connected to an account of the charge card system (21),
storing an electronic representation of the card number in the database (26), and
creating an account in the system connected to the entered card number (27).

12. A method according to claim 11,
**characterized** in that the card number is stored in the database as a determined number of bits.

13. A method according to claim 12,
**characterized** in that the step of storing an electronic representation of the card number in the database further comprises the step of:
extending the electronic representation of a short card number entered into the system with an additional number of characters, forming a card number comprising the determined number of bits (22,23).

14. A method according to claim 12 or 13,
**characterized** in that the step of storing an electronic representation of the card number in the database further comprises the step of:
reducing the electronic representation of a long card number entered into the system, forming a card number comprising the determined number of bits (24,25).

15. A method of processing a charge card transaction in a cnarge card system, **characterized** by the steps of:
entering into the system a card number originating from any of a plurality of different card issuers (31),
verifying the validity of the entered card number by determining if the number is connected to an account in the charge card system (32,33,34,35,36), and
if the number is connected to an account in the system, processing the transaction for the connected account (37).

16. A method according to claim 15,
**characterized** in that the step of verifying the validity of the entered card number by determining if the number is connected to an account in the charge card system further comprises the steps of:
creating an electronic representation of the card number entered into the system with a determined number of bits (32,33,34,35), and
comparing the electronic representation of the card number entered into the system, with the electronic representation of the numbers already regitered in the system database as being connected to accounts (36).

17. A method according to claim 16,
**characterized** in that the step of creating an electronic representation of the card number entered into the system with a determined number of bits further comprises the step of:
extending the electronic representation of a short card number entered into the system with an additional number of characters, forming a card number with the determined number of bits (32,33).

18. A method according to claim 16 or 17,
**characterized** in that the step of creating an electronic representation of the card number entered into the system with a determined number of bits further comprises the step of:
reducing the electronic representation of a long card number entered into the system, forming a card number comprising the determined number of bits (34,35).

19. A method according to any of the claims 15-18,
**characterized** in that preceding the step of processing the transaction for the connected account (37) it includes the further steps of:
entering into the system a personal identification number of the user, and
determining whether the entered identification number matches an identification number stored on the card or in the memory means.
